# EUROPÄISCHE PATENTSCHRIFT

(11) **EP 1 678 798 B1**
(45) Veröffentlichungstag und Bekanntmachung des Hinweises auf die Patenterteilung: **03.03.2010**
(21) Anmeldenummer: 04790911.4
(22) Anmeldetag: 27.10.2004
(51) Int. Cl.: H02G 3/14

(54) **GEHÄUSE**
HOUSING
BOITIER

(30) Priorität: 29.10.2003 DE 10350433
(43) Veröffentlichungstag der Anmeldung: 12.07.2006
(73) Patentinhaber: ADC GmbH, 14167 Berlin (DE); Harting Electric GmbH & Co. KG, 32339 Espelkamp (DE)
(72) Erfinder: HETZER, Ulrich, 12679 Berlin (DE); MÖSSNER, Frank, 12277 Berlin (DE); NAD, Ferenc, 14197 Berlin (DE)
(86) Internationale Anmeldenummer: PCT/EP2004/012136
(87) Internationale Veröffentlichungsnummer: WO 2005/043704

(56) Entgegenhaltungen:
- DE-A- 19 843 225
- US-A- 5 571 023

## Beschreibung

Die Erfindung betrifft ein Gehäuse zum Aufnehmen von elektrischen Leitungen und/oder Anschlüssen gemäß dem Oberbegriff des Patentanspruchs 1.

Derartige Gehäuse werden z. B. als Wandauslassdosen im industriellen Bereich in Produktionshallen eingesetzt. Diese umfassen einen ersten Gehäuseteil und einen zweiten Gehäuseteil. Z. B. der erste Gehäuseteil wird als Unterteil an der Wand befestigt, wobei der zweite Gehäuseteil beispielsweise mittels eines Scharniers an dem ersten Gehäuseteil angelenkt ist. Der zweite Gehäuseteil und/oder der erste Gehäuseteil weisen eine oder mehrere erste Öffnungen auf, über die ein elektrisches Kabel in das Gehäuse geführt werden kann. Des Weiteren kann der zweite Gehäuseteil und/oder der erste Gehäuseteil mindestens eine zweite Öffnung aufweisen, in der eine elektrische Buchse angeordnet ist. Dabei kann die Buchse von außen oder von innen vor die zweite Öffnung gesetzt werden. Das elektrische Kabel wird dann mit der Buchse verbunden. Durch Stecken eines geeigneten Steckers in die Buchse kann dann ein elektrisches und/oder elektronisches Gerät mit dem Kabel verbunden werden, z. B. um so Daten zu empfangen und/oder zu übertragen.

Ein Gehäuse gemäß dem Oberbegriff des Patentanspruchs 1 ist aus DE 198 43 225 A1 bekannt.

Der Erfindung liegt das technische Problem zu Grunde, ein Gehäuse zu schaffen, das an verschiedene Einsatzorte angepasst werden kann.

Die Lösung des technischen Problems ergibt sich insbesondere durch den Gegenstand mit den Merkmalen des Patentanspruchs 1. Weitere vorteilhafte Ausgestaltungen der Erfindung ergeben sich aus den Unteransprüchen.

Das Gehäuse ist als eine Wandauslassdose ausgestaltet, wobei der erste Gehäuseteil ais ein an einer Wand befestigbarer Gehäuseteil ausgestaltet ist. Dabei kann das Scharnier so ausgestaltet und/oder angeordnet sein sein, dass der zweite Gehäuseteil durch ein Verschwenken um die Drehachse in eine Anschlags- Drehstellung gelangt, in der der zweite Gehäuseteil an dem ersten Gehäuseteil und/oder an einem damit verbundenen Gegenstand anschlägt, und so ausgestaltet sein, dass bei Auftreten eines ausreichend grossen, über die Anschlags-Drehstellung hinaus wirkenden Drehmoments das erste Scharnierteil von dem zweiten Scharnierteil getrennt wird. Die Anschlags-Drehstellung wird erreicht, bevor der zweite Gehäuseteil die Wand berührt, und bei Auftreten des Drehmoments wird das erste Scharnierteil von dem zweiten Scharnierteil getrennt.
Zudem ist an einander gegenüberliegenden Seiten (insbesondere Aussenseiten) des ersten Gehäuseteils jeweils zumindest ein erstes Scharnierteil angeordnet, sodass das zweite Scharnierteil wahlweise an der einen Seite oder an der anderen Seite mit dem jeweiligen ersten Scharnierteil zu einem Scharnier kombiniert (angelenkt) werden kann.
Beispielsweise können die durch die an den gegenüberliegenden Seiten angeordneten Scharnierteile definierten Drehachsen parallel zueinander sein. Z. B. je nach Einsatzort kann somit entschieden werden, ob das Scharnier an der einen oder anderen Seite angeordnet werden soll.

An dem einen Scharnierteil ist zumindest eine Vertiefung angeordnet und an dem anderen Scharnierteil zumindest eine Erhebung, sodass die Erhebung in einer bestimmten Drehstellung und/oder in verschiedenen Drehstellungen über einen bestimmten Drehwinkelbereich in die Vertiefung eingreift.

Insbesondere kann die Erhebung in die Vertiefung einrasten. Darunter wird jedoch nicht verstanden, dass damit eine bestimmte (definierte) Drehstellung erreicht ist, die nur dadurch verlassen werden kann, dass die Erhebung aus der Vertiefung herausgebracht wird. Vielmehr kann die Erhebung auch in eine Vertiefung einrasten, in der sie sich noch in andere Drehstellungen bewegen kann.

Vorzugsweise erstreckt sich die Vertiefung und/oder die Erhebung geradlinig oder mit geradlinigen Rändern, wobei die geraden Linien parallel zur Drehachse verlaufen. Z. B. kann die Vertiefung zwei solche Ränder aufweisen, die in Umfangsrichtung um einen bestimmten konstanten Winkelabstand voneinander beabstandet sind, und erstreckt sich die Erhebung geradlinig, d. h. weist nur eine geringe Ausdehnung in Umfangsrichtung auf (z. B. 2 - 6 Grad).

Beispielsweise wirkt eine Erhebung am Außenumfang der Achse mit einer korrespondierenden Vertiefung am Innenumfang des Befestigungsteils in der beschriebenen Weise zusammen.

An dem Scharnierteil mit der Vertiefung kann zumindest eine weitere Vertiefung angeordnet sein, so dass eine Mehrzahl von Drehstellungen und/oder Drehwinkelbereichen bevorzugt ist. Auch ist es möglich, dass an demselben Scharnierteil zumindest eine Vertiefung und zumindest eine Erhebung angeordnet sind, wobei korrespondierend an dem anderen Scharnierteil eine Erhebung und eine Vertiefung angeordnet ist. Dadurch kann z. B. ein Einrasten an zwei verschiedenen Stellen am Umfang der Scharnierteile erreicht werden, wobei die verschiedenen Stellen derselben bevorzugten Drehstellung bzw. demselben bevorzugten Drehwinkelbereich oder verschiedenen bevorzugten Drehstellungen und/oder bevorzugten Drehwinkelbereichen entsprechen können. Alternativ oder zusätzlich ist es möglich, dass an dem Scharnierteil mit der Erhebung zumindest eine weitere Erhebung angeordnet ist. Dies erlaubt es beispielsweise, dass schon bei einer einzigen Vertiefung (aber auch bei mehreren Vertiefungen) an dem anderen Scharnierteil verschiedene bevorzugte Drehzustände (Drehstellungen und/oder Drehwinkelbereiche) eingestellt werden können. Z. B. können die Erhebungen einzeln oder auch gleichzeitig in dieselbe Vertiefung eingreifen. Greift beispielsweise nur eine Erhebung in die Vertiefung ein und greift gleichzeitig eine zweite vorhandene Erhebung in keine Vertiefung ein, kann ein "halb-bevorzugter" Drehzustand erreicht werden (d. h. es gibt sowohl Drehzustände, die besser gegen eine Veränderung des Drehzustands gesichert sind, als auch Drehzustände, die schlechter gegen eine Veränderung des Drehzustands gesichert sind). Greifen dagegen zwei oder mehrere Erhebungen in dieselbe Vertiefung ein oder gleichzeitig in verschiedene Vertiefungen ein, ergibt sich ein besonders bevorzugter Drehzustand.

Insbesondere kann sowohl das erste Scharnierteil als auch das zweite Scharnierteil im Querschnitt Umfangsflächen aufweisen, die im Wesentlichen entlang einer Kreislinie verlaufen. Dabei betrifft diese im Querschnitt kreisrunde Gestaltung den Außenumfang der Achse und den Innenumfang des Befestigungsteils. Die Erhebungen und Vertiefungen beziehen sich in diesem Fall auf den Vergleich mit einer exakt kreiszylindrischen Umfangsfläche.

Das erste Scharnierteil kann sowohl die Achse als auch das Befestigungsteil sein. Bevorzugtermaßen ist die Achse (soweit vorhanden) an demjenigen Gehäuseteil befestigt, das wiederum fest mit einem weiteren Gegenstand verbunden ist (z. B. einer Wand).

Zumindest ein Scharnierteil kann aus Kunststoff gefertigt sein, z. B. aus thermoplastisch verformbarem Kunststoff im Spritzgussverfahren. Auch andere Materialien wie z.B. Metall kommen in Frage.

In besonderer Ausgestaltung kann sich die Vertiefung in der Umfangsrichtung erstrecken, sodass die Erhebung über einen Drehwinkelbereich in die Vertiefung eingreift. Somit wird nicht nur eine einzige Drehstellung bevorzugt, sondern alle Drehstellungen in dem Drehwinkelbereich. Bei der Fertigung des Scharniers bringt dies Vorteile mit sich, da sich Fertigungstoleranzen nicht störend auswirken und insbesondere bestimmte erwünschte Drehstellungen bevorzugt sind. Außerdem gestattet es diese Ausgestaltung, die Gehäuseteile innerhalb des bevorzugten Drehwinkelbereichs zu bewegen. Z. B. bei einem Stoß gegen ein Gehäuseteil kann dieses dann noch ausweichen.

Dieser Drehwinkelbereich kann eine Drehstellung aufweisen, in der durch ein Zusammenwirken des ersten Gehäuseteils und des zweiten Gehäuseteils eine Öffnung des Gehäuses geschlossen ist. Die Öffnung ist beispielsweise nahezu so groß wie ein vollständiger Gehäuse-Querschnitt (z. B. durch ein Unterteil und/oder durch ein an einer Wand befestigtes Gehäuseteil) und wird durch das zweite Gehäuseteil (Deckel) in der Drehstellung geschlossen.

Alternativ oder zusätzlich zu dem zuvor beschriebenen Fall kann das Gehäuse in der bestimmten Drehstellung und/oder in dem bestimmten Drehwinkelbereich offen sein (d. h. die Öffnung des Gehäuses von außen zugänglich sein), wobei durch ein Zusammenwirken der Vertiefung und der Erhebung ein mechanischer Widerstand gebildet ist, der überwunden werden muss, um das zweite Gehäuseteil und das erste Gehäuseteil in eine Drehstellung zu bringen, in der die Öffnung des Gehäuses geschlossen ist.

Insbesondere kann das Scharnier so ausgestaltet sein, dass ein Rand der Vertiefung einen mechanischen Widerstand für die Erhebung bildet, wobei der Widerstand bei einer Drehbewegung überwunden werden muss, damit die Erhebung die Vertiefung verlassen kann. Dies bezieht sich nicht nur auf den vorangegangenen Absatz.

Vorzugsweise erstrecken sich die Vertiefung und die Erhebung in Richtung der Drehachse nur über einen Teil der axialen Erstreckung der Achse, sodass durch ein Zusammenwirken der Vertiefung und der Erhebung ein mechanischer Widerstand gebildet ist, der ein Verlassen der Vertiefung durch eine Bewegung der Erhebung in Richtung der Drehachse erschwert oder verhindert. Bei dieser Ausgestaltung kann verhindert werden, dass die Scharnierteile und damit die Gehäuseteile unbea bsichtigt voneinander getrennt werden.

Bei dem Scharnier kann es sich auch um ein geteiltes Scharnier handeln, wobei z. B. eine Mehrzahl von Teilbereichen des Scharniers voneinander beabstandet ist. Insbesondere kann eine Mehrzahl der ersten und/oder zweiten Scharnierteile vorgesehen sein, wobei die Mehrzahl der ersten bzw. zweiten Scharnierteile so angeordnet ist, dass daraus ein gemeinsames Scharnier mit einer definierten Drehachse gebildet ist oder gebildet werden kann. Hierdurch kann bei hoher Stabilität der Scharnierverbindung Platz und Material gespart werden. Insbesondere können die einzelnen Scharnier-Teilbereiche mechanisch besonders stabil ausgeführt sein.

Die Erfindung wird nachfolgend anhand eines bevorzugten Ausführungsbeispieles näher erläutert. Die Figuren zeigen:
- Fg. 1: eine perspektivische Draufsicht auf einen zweiten Gehäuseteil (Gehäuse-Deckel),
- Fig. 2: eine perspektivische Unteransicht des zweiten Gehäuseteils,
- Fig. 3: eine perspektivische Draufsicht auf einen ersten Gehäuseteil (Gehäuse-Unterteil) mit eingesetztem Kabelführungselement sowie Buchsen in einer ersten Betriebsart,
- Fig. 4: eine perspektivische Draufsicht auf den ersten Gehäuseteil mit eingesetztem
Kabelführungselement sowie Buchsen in einer zweiten Betriebsart,
- Fig. 5: eine weitere perspektivische Draufsicht auf den ersten Gehäuseteil,
- Fig. 6: eine perspektivische Draufsicht auf das Kabelführungselement,
- Fig. 7: eine perspektivische Unteransicht auf das Kabelführungselement,
- Fig. 8 bis Fig. 10: eine Seitenansicht mit teilweise geschnittenen Bereichen eines Scharniers in verschiedenen Drehstellungen,
- Fig. 11: eine Seitenansicht des geschlossenen Gehäuses, und
- Fig. 12: eine Ansicht einer Stirnseite des zweiten Gehäuseteils.

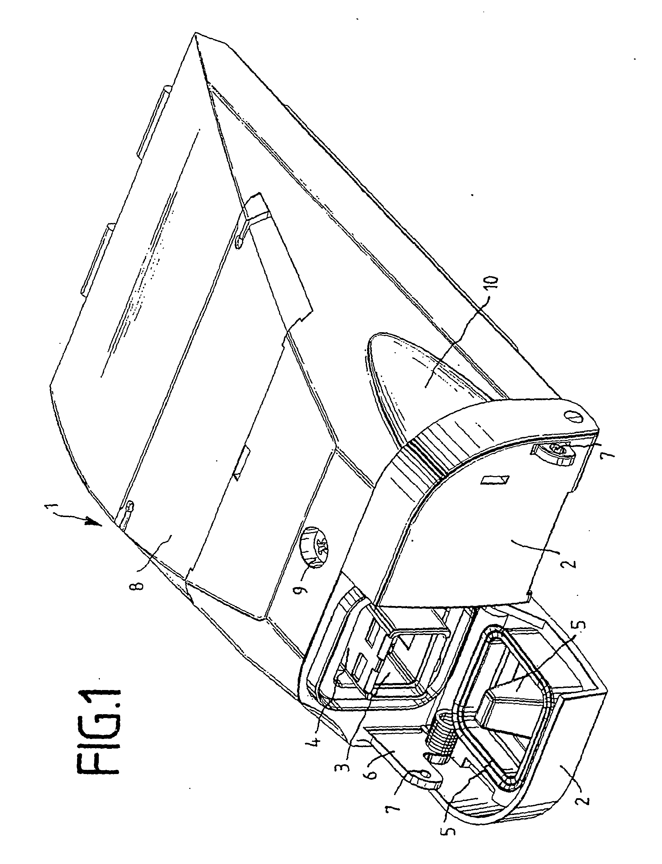

In der Fig. 1 ist der zweite Gehäuseteil 1 eines Gehäuses dargestellt, wobei das Gehäuse als Wandauslassdose ausgestaltet ist. Merkmale und Merkmalskom binationen dieser Ausführungsform können jedoch auch bei anderen Ausgestaltung en vorgesehen sein. Der zweite Gehäuseteil 1 umfasst zwei Klappen 2, mittels derer zweite Öffnungen 3 in einer Stirnfläche des zweiten Gehäuseteils 1 verschließbar sind. Dabei ist die rechte Klappe 2 im geschlossenen Zustand und die linke Klappe 2 im geöffneten Zustand dargestellt. In die zweite Öffnung ist ein Aufsatz 4 eingesteckt, der auf einen einzusteckenden Stecker abgestimmt ist. Hinter diesem Aufsatz 4 ist dann eine Buchse angeordnet, was später noch näher erläutert wird. An der Innenseite der Klappe 2 sind Dichtelemente 5 angeordnet, die im geschlossenen Zustand die Öffnung 3 mit Aufsatz 4 hermetisch gegen Feuchtigkeit und Schmutz schützen. Seitlich an der Stirnseite sind zwei Verplombungshaken 6 angeordnet, die im geschlossenen Zustand der Klappe 2 durch Öffnungen in der Klappe 2 herausragen. Durch Löcher 7 innerhalb der Verplombungshaken 6 kann dann ein Draht durchgeführt und verplombt werden, so dass ein unbefugter Zugang erschwert bzw. bemerkt wird. Auf der Oberseite des zweiten Gehäuseteils 1 ist eine Beschriftungsfläche mit Abdeckung 8 angeordnet sowie eine Bohrung 9, mittels derer der zweite Gehäuseteil mit dem ersten Gehäuseteil verschraubbar ist. Seitlich am zweiten Gehäuseteil 1 im Bereich der Klappen 2 sind Mulden 10 ausgeformt, die als Soll-Druckpun kte zum Öffnen der Klappe 2 dienen. Die Klappen 2 sind einerseits durch eine Feder vorgespannt und über eine nicht dargestellte Rastnase am zweiten Gehäuseteil und eine Rastmulde an der Klappe verrastet. Durch die schräge Krafteinwirkung über die Mulden 10 wird dann die Entrastung vereinfacht.

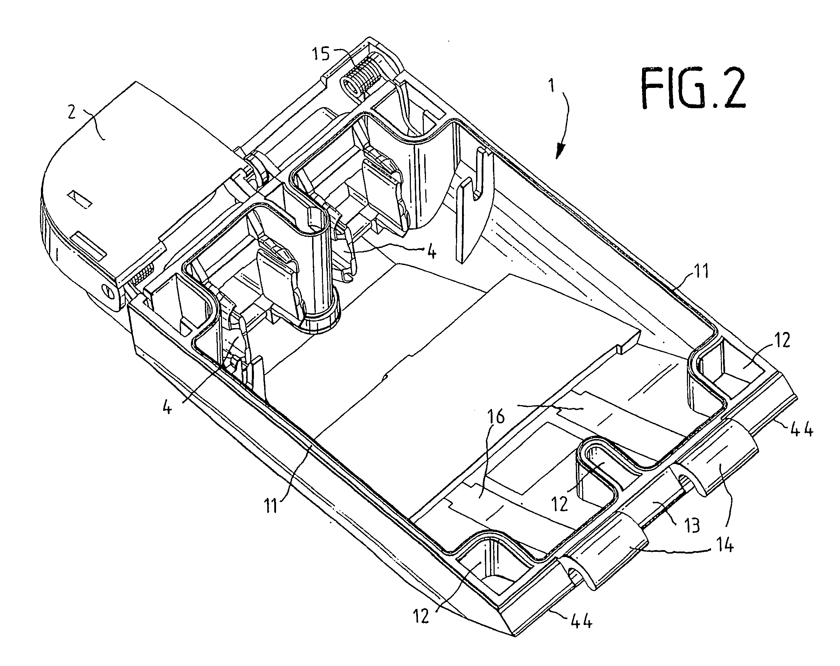

In der Fig. 2 ist der zweite Gehäuseteil in einer Unteransicht dargestellt. Dabei verläuft eine Nut 11 für eine Dichtung nahezu um den gesamten Umfang des zweiten Gehäuseteils 1, wobei die Bohrungen bzw. Löcher 12 für Schrauben außerhalb der Nut 11 angeordnet sind. An der gegenüberliegenden Stirnseite 13 der Klappen 2 sind zwei Befestigungsteile 14 angeordnet. Auf der Unterseite sind die Befestigungsteile 14 jeweils mit einer Rastnase ausgebildet, deren Funktion später nach erläutert wird. Wie man weiter erkennt, ragen die beiden Aufsätze 4 in den zweiten Gehäuseteil hinein. Rechts oben erkennt man die Feder 15, die die Klappe 2 vorspannt. Auf der Unterseite des zweiten Gehäuseteils 1 sind weiter Montagehilfen 16 aufgebracht, aus denen beispielsweise ersichtlich ist, wie weit ein elektrisches Kabel abgeschnitten bzw. abisoliert werden muss.

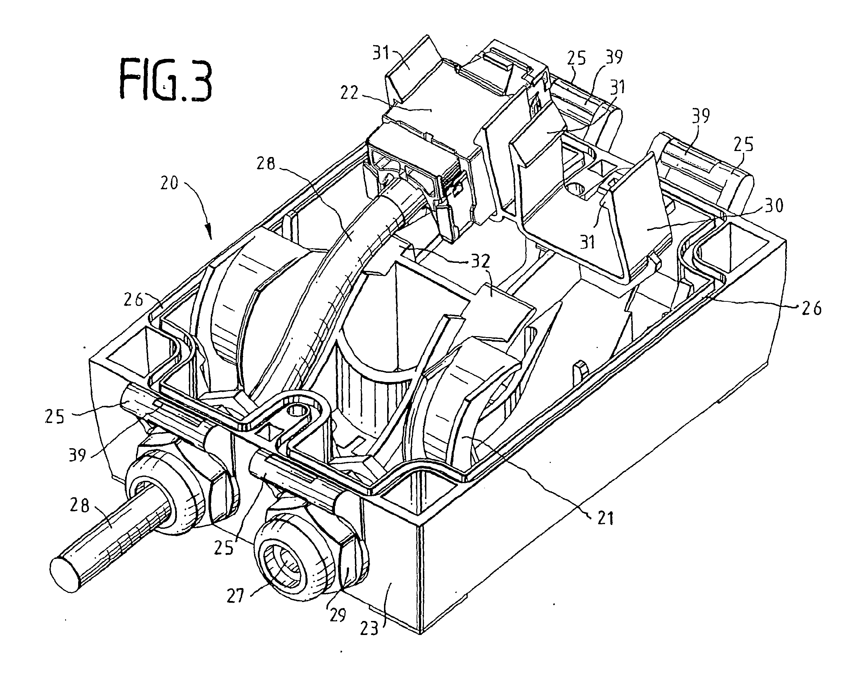

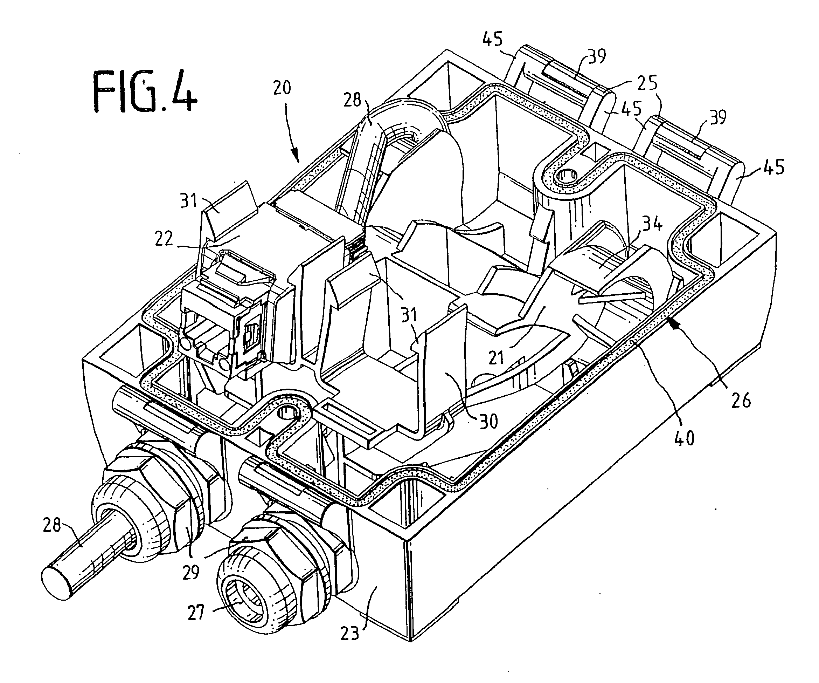

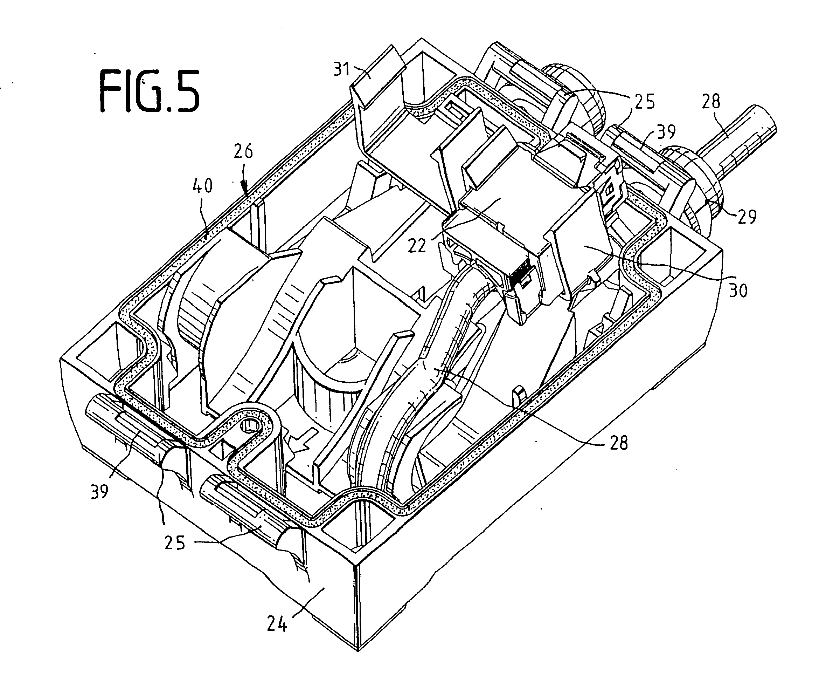

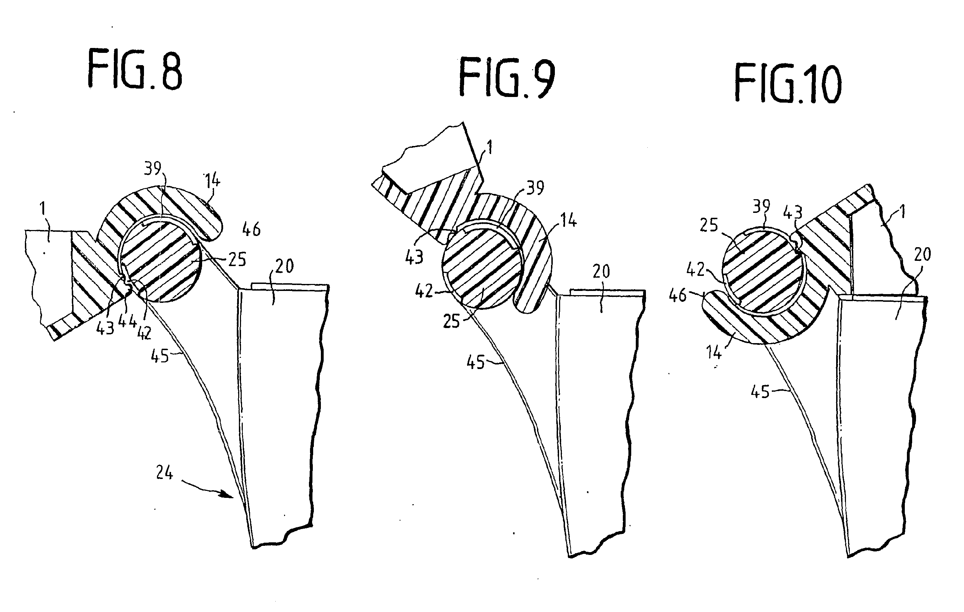

In der Fig. 3 ist der erste Gehäuseteil 20 der Wandauslassdose mit eingesetztem Kabelführungselement 21 sowie Buchsen 2 dargestellt. An den beiden Stirnseiten 23 bzw. 24 (siehe Fig. 5) sind jeweils zwei Achsen 25 angeordnet, wobei der zweite Gehäuseteil 1 mittels den Befestigungsteilen 14 an den Achsen 25 angelenkt werden kann. Nahezu um den gesamten Umfang des ersten Gehäuseteils 20 ist eine Nut 26 für die Dichtung 40 vorgesehen (siehe Fig. 4 und 5). An der Stirnseite 23 weist der erste Gehäuseteil 20 zwei erste Öffnungen 27 für die elektrischen Kabel 28 auf, wobei die Öffnungen 27 mit Kabeln 28 mittels Dichtelementen 29 hermetisch abschließbar sind. Das Kabelführungselement 21 ist mit jeweils zwei U-förmigen Schenkeln 30 ausgebildet, die zur Aufnahme und Befestigung der Buchsen 22 dienen. Hierzu sind an der Oberseite der Schenkel 30 nach innen gerichtete Klemmrippen 31 vorgesehen, die sich über die Oberseite der Buchsen 22 schieben. In einer ersten Betriebsart ist das Kabelführungselement 21 derart in dem ersten Gehäuseteil 20 eingesetzt, dass die U-förmigen Schenkel 30 an der Stirnseite 24 liegen. Dies ist in Fig. 3 dargestellt. In diesem Fall wird der zweite Gehäuseteil 1 mit den Befestigungsteilen 14 an den Achsen 25 an der Stirnseite 23 angelenkt. Dies bedeutet, dass, wenn die Wandauslassdose an der Wand montiert ist und die elektrischen Kabel 28 von oben kommen, dann der Abgriff mittels der nicht dargestellten Stecker von unten erfolgt. Zum definierten Führen des elektrischen Kabels 28 innerhalb der Wandauslassdose wird das Kabel 28 durch die Öffnung 27 gesteckt und über eine erste Kabelführungsbahn 32 von der Öffnung 27 zur Buchse 22 geführt und werden dort die elektrischen Adern des Kabels 28 angeschlossen. Die Achsen 25 sind jeweils mit einer Vertiefung 39 ausgebildet, die vorzugsweise etwas außermittig angeordnet ist und sich nicht über die gesamte Länge der Achse 25 in ihrer Längsrichtung erstreckt. Ferner ist noch eine weitere Vertiefung, eine Rastvertiefung 42 in jeder Achsen 25 vorgesehen, die sich in der Ansicht von Fig. 3 auf der Rückseite der Achse 25 befindet. Die Rastvertiefung 42 ist gut aus Fig. 8 bis Fig. 10 erkennbar. Auch die Rastvertiefung 42 erstreckt sich nur über einen Teil der Länge der Achse 25. Die Längen und Positionen der Rastvertiefung 42 und der Vertiefung 39 in der Längsrichtung sind gleich, so dass eine entsprechende Erhebung 43 an dem Befestigungsteil 14 mit seiner gesamten Länge sowohl in die Vertiefung 39 als auch in die Rastvertiefung 42 einrasten kann. Beim Hochklappen des zweiten Gehäuseteils 1 aus der geschlossenen Stellung des Gehäuses über einen Grenzwinkel von beispielsweise 160° rutscht die Erhebung 43 des Befestigungsteils 14 in die Rastvertiefung 42 und sichert den zweiten Gehäuseteil 1 gegen ein unbeabsichtigtes Zurückdrehen in die geschlossenen Stellung.

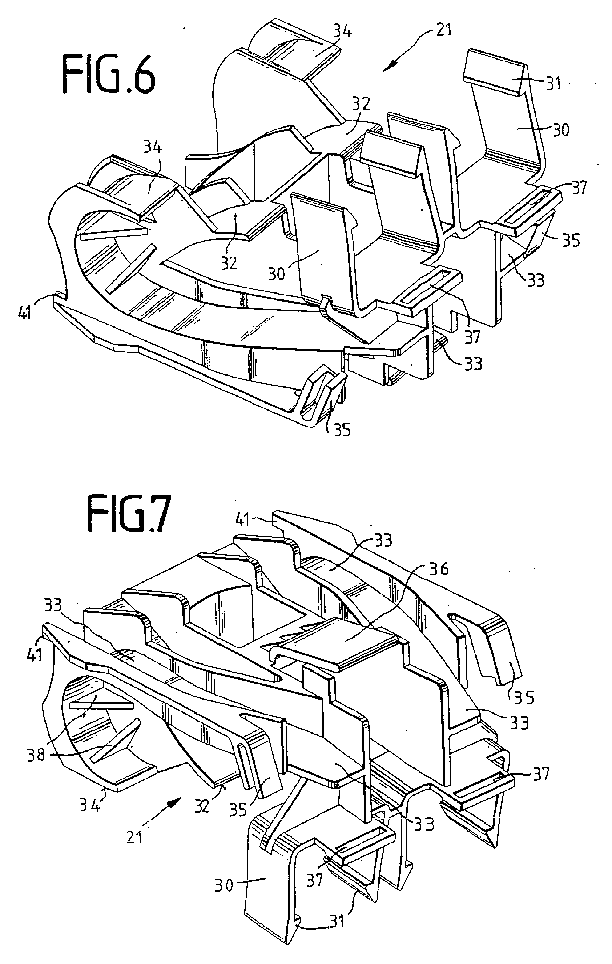

Die Kabelführungsbahn 32 ist derart ausgebildet, dass Mindestbiegeradien des elektrischen Kabels 28 für hohe Datenübertragungsraten wie beispielsweise Kat 6 eingehalten werden. Wie insbesondere in Fig. 6 gut zu erkennen ist, bewirkt die Ausbildung der Kabelführungsbahn 32 eine Zwangsführung, so dass der Monteur das Kabel 28 nicht unterhalb der Mindestbiegeradien biegen oder gar knicken kann.

In der Fig. 4 und 5 ist eine zweite Betriebsart dargestellt, wobei das Kabelführungselement 21 um 180° gedreht in dem ersten Gehäuseteil 21 angeordnet ist, so dass die U-förmigen Schenkel 30 an der Stirnseite 23 angeordnet sind. In diesem Fall wird der zweite Gehäuseteil 1 mit seinen Befestigungsteilen 14 an den Achsen 25 der Stirnseite 24 angelenkt. Dies erfordert jedoch eine andere Kabelführung innerhalb der Wandauslassdose. Hierzu wird das elektrische Kabel 28 nach der Öffnung 27 zunächst über die Kabelführungsbahn 33 (siehe Fig. 6) von der Stirnseite 23 zur Stirnseite 24 geführt, nach oben gebogen und über die Kabelführungsbahn 34 zur Buchse 22 geführt.

Mittels des lösbaren Kabelführungselementes 21 sowie der an beiden Stirnseiten 23, 24 angeordneten Achsen 25 kann somit wahlweise der Abgriff mittels des Steckers an der Stirnseite 23 oder 24 erfolgen. Ist beispielsweise die Wandanschlussdose an der Wand befestigt und kommt das elektrische Kabel 28 von unten, so kann durch die zweite Betriebsart gemäß Fig. 4 und 5 dennoch gewährleistet werden, dass auch der Abgriff durch die Stecker von unten erfolgt.

Das Kabelführungselement 21 ist in Fig. 6 und 7 im Detail dargestellt. Neben den bereits beschriebenen Elementen weist das vorzugsweise einstückige Kabelführungselement 21 ein Paar Federelemente 35 auf, die das Kabelführungselement 21 federnd gegen die Innenseite des ersten Gehäuseteils 20 drücken. Des Weiteren weist das Kabelführungselement 21 ein zweites Federelement 36 auf, das das Kabelführungselement 21 federnd gegen die Unterseite des ersten Gehäuseteils abstützt. Dabei bewirkt das Federelement 36 eine Höhenausrichtung der Buchsen 22, wobei die Fixierung der Buchse 22 in Längsrichtung primär durch die Anschlagkanten 37 erfolgt. Zur Erhöhung der Steifigkeit ist das Kabelführungselement 21 darüber hinaus im Bereich der Kabelfü hrungsbahn 34 mit Versteifungsrippen 38 ausgebildet. An der den Federelementen 35 gegenüberliegenden Seite ist das Kabelführungselement 21 mit Vorsprüngen 41 ausgebildet, die in entsprechende Ausnehmungen im ersten Gehäuseteil 20 einrasten.

Fig. 8 bis Fig. 10 zeigen einen Scharnierbereich der Wandauslassdose, wobei der erste Gehäuseteil 1 an der Stirnseite 24 des zweiten Gehäuseteils 20 angelenkt ist. Das teilweise (schraffierter Bereich) in Schnittdarstellung dargestellte Befestigungsteil 14 umfasst die Achse 25 in Umfangsrichtung über einen Winkelbereich von etwas mehr als 180 Grad. Man erkennt, dass sich die Vertiefung 39 über einen Winkelbereich von etwa 90 Grad erstreckt. Dagegen erstreckt sich die Vertiefung 42 lediglich über einen Winkelbereich von ca. 35 Grad. Die Achse 25 ist über mehrere stegartige Übergangsbereiche 45 (wie insbesondere auch gut aus Fig. 4 erkennbar ist) mit dem ersten Gehäuseteil 20 verbunden. Insbesondere werden der gesamte erste Gehäuseteil 20 und der gesamte zweite Gehäuseteil 1 jeweils im Spritzgussverfahren einstückig hergestellt.

Die Erhebung 43 am Innenumfang des Befestigungsteils ist in Umfangsrichtung kurz (etwa 3 bis 10 Grad) vor dem Ende des Bereichs angeordnet, der die Achse 25 umfasst, und zwar an demjenigen Ende, an dem dieser Bereich mit dem zweiten Gehäuseteil verbunden ist.

Fig. 10 zeigt das erste Gehäuseteil 20 und das zweite Gehäuseteil 1 in einer nahezu vollständig geschlossenen Drehstellung der Wandauslassdose. Man erkennt, dass die im Querschnitt höckerartige Erhebung 43 in die Vertiefung 39 eingreift und dabei nahezu an dem Rand der Vertiefung 39 anliegt. Wird der zweite Gehäuseteil 1 um die Drehachse (in der Darstellung der Fig. 8 bis Fig. 10 im Gegenuhrzeigersinn) gedreht, öffnet sich das Gehäuse zunehmend und gibt die Öffnung des ersten Gehäuseteils 20 zunehmend frei. Dabei verlässt die Erhebung 43 kurz vor dem Erreichen der in Fig. 9 dargestellten Drehstellung die Vertiefung 39 unter leichter Verformung des Befestigungsteils 14. Das Befestigungsteil 14 liegt daher in der in Fig. 9 dargestellten Drehstellung leicht geklemmt an dem Außenumfang der Achse 25 an. Die Klemmung bietet einen geringen Widerstand bei der weiteren Drehbewegung. Kurz vor dem Erreichen der in Fig. 8 dargestellten Drehstellung rastet die Erhebung 43 in die Rastvertiefung 42 ein. Dabei entspannt sich das Material des Befestigungsteils 14. Durch das Einrasten wird verhindert, dass sich der zweite Gehäuseteil 1 unbeabsichtigt wieder in die geschlossene Stellung der Wandauslassdose zurück dreht.

Wird der zweite Gehäuseteil 1 noch weiter (hier im Gegenuhrzeigersinn ) um die Drehachse der Achse 25 gedreht, schlägt die Kante 44 (Fig. 2) des Befestigungsteil 14 an den Übergangsbereich 45 an und können durch Aufbringen eines entsprechend großen Drehmoments die Befestigungsteile 14 von den Achsen 25 weggehebelt werden, sodass die Befestigungsteile 14 die Achsen 25 nicht mehr umfassen. Alternativ kann auch ein anderer Bereich des zweiten Gehäuseteils 1 an einem mit dem ersten Gehäuseteil 20 verbundenen Gegenstand, etwa den Dichtelementen 29, angeschlagen und ausgehebelt werden.

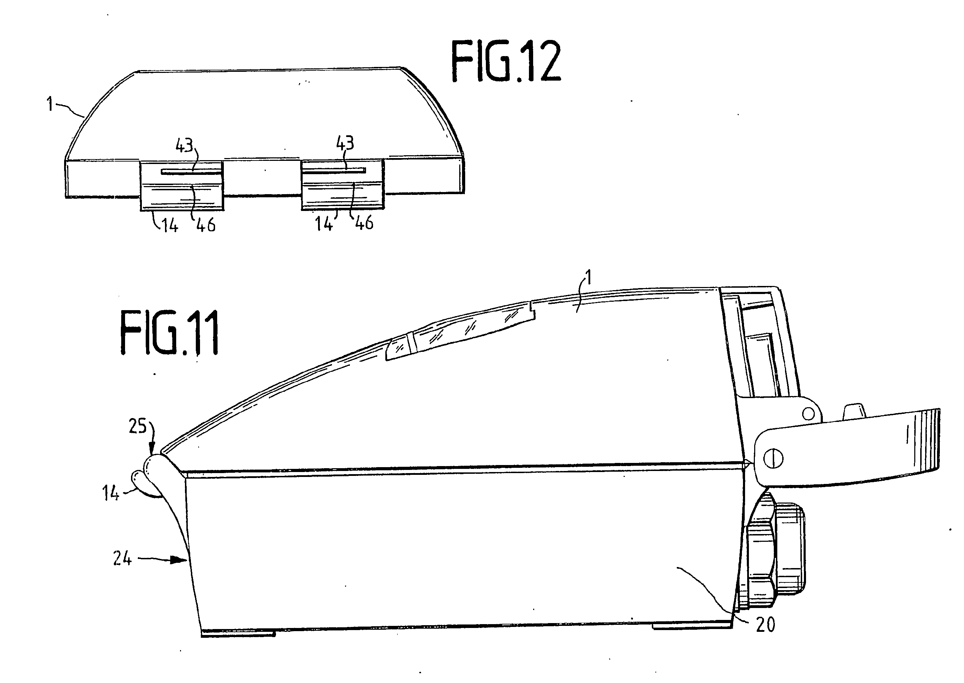

Fig. 11 zeigt die Anordnung in der Drehstellung der Fig. 10.

Fig. 12 zeigt den zweiten Gehäuseteil 1. Man erkennt die beiden an der Stirnseite abragenden Befestigungsteile 14 mit ihren freien Enden 46 und den Erhebungen 43, die sich nur über einen Teil der Länge des jeweiligen Befestigungsteils 14 erstrecken.

### Bezugszeichenliste

- 1: Zweiter Gehäuseteil (Deckel)
- 2: Klappe
- 3: Öffnung
- 4: Aufsatz
- 5: Dichtelement
- 6: Verplombungshaken
- 7: Löcher
- 8: Abdeckung
- 9: Bohrung
- 10: Mulden
- 11: Nut
- 12: Löcher
- 13: Stirnseite
- 14: Befestigungsteil
- 15: Feder
- 16: Montagehilfen
- 20: Erster Gehäuseteil (Unterteil)
- 21: Kabelführungselement
- 22: Buchsen
- 23: Stirnseite
- 24: Stirnseite
- 25: Achse
- 26: Nut
- 27: Öffnung
- 28: Kabel
- 29: Dichtelement
- 30: U-förmige Schenkel
- 31: Klemmrippen
- 32: Kabelführungsbahn
- 33: Kabelführungsbahn
- 34: Kabelführungsbahn
- 35: Federelement
- 36: Federelement
- 37: Anschlagkante
- 38: Versteifungsrippen
- 39: Vertiefung
- 40: Dichtung
- 41: Vorsprung
- 42: Rastvertiefung
- 43: Erhebung
- 44: Kante
- 45: Übergangsbereich
- 46: Ende

## Patentansprüche

1. Gehäuse zum Aufnehmen von elektrischen Leitungen und/oder Anschlüssen, umfassend einen ersten Gehäuseteil (20) und einen zweiten Gehäuseteil (1), die über zumindest ein Scharnier (14, 25) miteinander verbunden sind, wobei das Scharnier eine Drehachse definiert, um die der erste Gehäuseteil (20) und der zweite Gehäuseteil (1) gegeneinander verschwenkbar sind, wobei an dem ersten Gehäuseteil (20) ein erstes Scharnierteil des Scharniers (14, 25) befestigt ist, wobei an dem zweiten Gehäuseteil (1) ein zweites Scharnierteil befestigt ist, wobei eines der Scharnierteile eine sich in Richtung der Drehachse erstreckende Achse (25) ist und wobei das andere der Scharnierteile ein sich in Umfangsrichtung der Achse (25) erstreckendes Befestigungsteil (14) ist, wobei an dem einen Scharnierteil zumindest eine Vertiefung (39, 42) angeordnet ist und an dem anderen Scharnierteil zumindest eine Erhebung (43) angeordnet ist, sodass die Erhebung (43) in einer bestimmten Drehstellung und/oder in verschiedenen Drehstellungen über einen bestimmten Drehwinkelbereich in die Vertiefung (39, 42) eingreift, wobei das Gehäuse als eine Wandauslassdose ausgestaltet ist, wobei der erste Gehäuseteil (20) als ein an einer Wand befestigbarer Gehäuseteil ausgestaltet ist,
**dadurch gekennzeichnet, dass**
an einander gegenüberliegenden Seiten des ersten Gehäuseteils (20) jeweils zumindest ein erstes Scharnierteil angeordnet ist, sodass das zweite Scharnierteil wahlweise an der einen Seite oder an der anderen Seite mit dem jeweiligen ersten Scharnierteil zu dem Scharnier kombiniert werden kann, wobei das Scharnier (14, 25) so ausgestaltet ist, dass der zweite Gehäuseteil (1) durch ein Verschwenken um die Drehachse in eine Anschlags-Drehstellung gelangt, in der der zweite Gehäuseteil (1) an dem ersten Gehäuseteil (20) und/oder an einem damit verbundenen Gegenstand (29) anschlägt, und bei Auftreten eines ausreichend großen, über die Anschlags-Drehstellung hinaus wirkenden Drehmoments das erste Scharnierteil von dem zweiten Scharnierteil getrennt wird, wobei das Gehäuse so ausgestaltet ist, dass die Anschlags-Drehstellung erreicht wird, bevor der zweite Gehäuseteil (1) die Wand berührt.

2. Gehäuse nach Anspruch 1, **dadurch gekennzeichnet, dass** sich die Vertiefung (39, 42) in der Umfangsrichtung erstreckt, sodass die Erhebung (43) über einen Drehwinkelbereich in die Vertiefung (39, 42) eingreift.

3. Gehäuse nach Anspruch 2, **dadurch gekennzeichnet, dass** der Drehwinkelbereich eine Drehstellung aufweist, in der durch ein Zusammenwirken des ersten Gehäuseteils (20) und des zweiten Gehäuseteils (1) eine Öffnung des Gehäuses geschlossen ist.

4. Gehäuse nach einem der vorhergehenden Ansprüche, **dadurch gekennzeichnet, dass** das Scharnier (14, 25) so ausgestaltet ist, dass ein Rand der Vertiefung (39, 42) einen mechanischen Widerstand für die Erhebung (43) bildet, wobei der Widerstand bei einer Drehbewegung überwunden werden muss, damit die Erhebung (43) die Vertiefung (39, 42) verlassen kann.

5. Gehäuse nach einem der vorhergehenden Ansprüche, **dadurch gekennzeichnet, dass** das Gehäuse in der bestimmten Drehstellung und/oder in dem bestimmten Drehwinkelbereich offen ist, wobei durch ein Zusammenwirken der Vertiefung (39, 42) und der Erhebung (43) ein mechanischer Widerstand gebildet ist, der überwunden werden muss, um das zweite Gehäuseteil (1) und das erste Gehäuseteil (20) in eine Drehstellung zu bringen, in der eine Öffnung des Gehäuses geschlossen ist.

6. Gehäuse nach einem der vorangegangenen Ansprüche, **dadurch gekennzeichnet, dass** sich die Vertiefung (39, 42) und die Erhebung (43) in Richtung der Drehachse nur über einen Teil der axialen Erstreckung der Achse (25) erstrecken, sodass durch ein Zusammenwirken der Vertiefung (39, 42) und der Erhebung (43) ein mechanischer Widerstand gebildet ist, der ein Verlassen der Vertiefung (39, 42) durch eine Bewegung der Erhebung (43) in Richtung der Drehachse erschwert oder verhindert.

7. Gehäuse nach einem der vorangegangenen Ansprüche, **dadurch gekennzeichnet, dass** eine Mehrzahl der ersten und/oder zweiten Scharnierteile vorgesehen ist, wobei die Mehrzahl der ersten bzw. zweiten Scharnierteile so angeordnet ist, dass daraus ein gemeinsames Scharnier (14, 25) mit einer definierten Drehachse gebildet ist oder gebildet werden kann.

## Claims

1. Housing for holding electrical cables and/or connections, comprising a first housing part (20) and a second housing part (1) which are connected to one another via at least one hinge (14,15), with the hinge defining a rotation axis about which the first housing part (20) and the second housing part (1) can be pivoted with respect to one another, with a first hinge part of the hinge (14, 25) being attached to the first housing part (20), with a second hinge part being attached to the second housing part (1), with one of the hinge parts being a shaft (25) which extends in the direction of the rotation axis, and with the other of the hinge parts being an attachment part (14) which extends in the circumferential direction of the shaft (25), with at least one depression (39, 42) being arranged on one hinge part and at least one projection (43) being arranged on the other hinge part, such that the projection (43) engages in the depression (39, 42) in a specific rotation position and/or in different rotation positions over a specific rotation angle range, with the housing being in the form of a wall outlet box, with the first housing part (20) being designed as a housing part which can be attached to a wall, **characterized in that** at least one first hinge part is in each case arranged on mutually opposite faces of the first housing part (20), such that the second hinge part on one face or on the other face can optionally be combined with the respective first hinge part to form the hinge, with the hinge (14, 25) being designed such that the second housing part (1) reaches a stop rotation position by pivoting about the rotation axis, in which the second housing part (1) abuts against the first housing part (20) and/or against an object (29) which is connected to it, and, when a sufficiently large torque acting beyond the stop rotation position occurs, the first hinge part is disconnected from the second hinge part, with the housing being designed such that the stop rotation position is reached before the second housing part (1) touches the wall.

2. Housing according to Claim 1, **characterized in that** the depression (39, 42) extends in the circumferential direction such that the projection (43) engages in the depression (39, 42) over a rotation angle range.

3. Housing according to Claim 2, **characterized in that** the rotation angle range has one rotation position in which an opening in the housing is closed by interaction of the first housing part (20) with the second housing part (1).

4. Housing according to one of the preceding claims, **characterized in that** the hinge (14, 25) is designed such that one edge of the depression (39, 42) forms a mechanical resistance for the projection (43), with the resistance having to be overcome during a rotary movement in order to allow the projection (43) to leave the depression (39, 42).

5. Housing according to one of the preceding claims, **characterized in that** the housing is open in the specific rotation position and/or in the specific rotation angle range, with a mechanical resistance being formed by interaction of the depression (39, 42) with the depression (43), which must be overcome in order to move the second housing part (1) and the first housing part (20) to a rotation position in which an opening in the housing is closed.

6. Housing according to one of the preceding claims, **characterized in that** the depression (39, 42) and the projection (43) extend over only a part of the axial extent of the shaft (25) in the direction of the rotation axis, so that a mechanical resistance is formed by interaction of the depression (39, 42) with the projection (43), which makes it harder or impossible to leave the depression (39, 42) by movement of the projection (43) in the direction of the rotation axis.

7. Housing according to one of the preceding claims, **characterized in that** two or more of the first and/or second hinge parts are provided, with the two or more first and/or second hinge parts being arranged such that a common hinge (14, 25) with a defined rotation axis is formed or can be formed from them.

## Revendications

1. Boîtier destiné à recevoir des lignes électriques et/ou des raccords électriques, comprenant une première partie de boîtier (20) et une deuxième partie de boîtier (1), qui sont connectées l'une à l'autre par le biais d'au moins une charnière (14, 25), la charnière définissant un axe de rotation, autour duquel la première partie de boîtier (20) et la deuxième partie de boîtier (1) peuvent pivoter l'une par rapport à l'autre, une première partie de charnière de la charnière (14, 25) étant fixée sur la première partie de boîtier (20), une deuxième partie de charnière étant fixée à la deuxième partie de boîtier (1), l'une des parties de charnière étant un axe (25) s'étendant dans la direction de l'axe de rotation et l'autre des parties de charnière étant une partie de fixation (14) s'étendant dans la direction périphérique de l'axe (25), au moins un renfoncement (39, 42) étant disposé sur l'une des parties de charnière, et au moins un rehaussement (43) étant disposé sur l'autre partie de charnière, de sorte que le rehaussement (43) vienne en prise dans le renfoncement (39, 42) dans une position de rotation définie et/ou dans différentes positions de rotation, sur une plage d'angle de rotation définie,
le boîtier étant réalisé sous forme de boîte d'encastrement, la première partie de boîtier (20) étant réalisée sous forme de partie de boîtier pouvant être fixée à une paroi,
**caractérisé en ce**
**qu'**au moins une première partie de charnière est à chaque fois disposée sur des côtés opposés de la première partie de boîtier (20), de sorte que la deuxième partie de charnière puisse être combinée au choix sur un côté ou sur l'autre à la première partie de charnière respective pour former la charnière, la charnière (14, 25) étant configurée de telle sorte que la deuxième partie de boîtier (1) parvienne par un pivotement autour de l'axe de rotation dans une position de rotation de butée, dans laquelle la deuxième partie de boîtier (1) bute contre la première partie de boîtier (20) et/ou contre un objet (29) connecté à celle-ci, et à l'apparition d'un couple suffisamment grand agissant au-delà de la position de rotation de butée, la première partie de charnière étant séparée de la deuxième partie de charnière, le boîtier étant configuré de telle sorte que la position de rotation de butée soit atteinte avant que la deuxième partie de boîtier (1) ne vienne en contact avec la paroi.

2. Boîtier selon la revendication 1, **caractérisé en ce que** le renfoncement (39, 42) s'étend dans la direction périphérique, de sorte que le rehaussement (43) vienne en prise dans le renfoncement (39, 42) sur une plage d'angle de rotation.

3. Boîtier selon la revendication 2, **caractérisé en ce que** la plage d'angle de rotation présente une position de rotation dans laquelle une ouverture du boîtier est fermée par une coopération de la première partie de boîtier (20) avec la deuxième partie de boîtier (1).

4. Boîtier selon l'une quelconque des revendications précédentes, **caractérisé en ce que** la charnière (14, 25) est configurée de telle sorte qu'un bord du renfoncement (39, 42) forme une résistance mécanique pour le rehaussement (43), la résistance devant être surmontée dans le cas d'un mouvement de rotation, afin que le rehaussement (43) puisse quitter le renfoncement (39, 42).

5. Boîtier selon l'une quelconque des revendications précédentes, **caractérisé en ce que** le boîtier est ouvert dans la position de rotation définie et/ou dans la plage d'angle de rotation définie, une résistance mécanique étant formée par coopération du renfoncement (39, 42) et du rehaussement (43), laquelle doit être surmontée afin d'amener la deuxième partie de boîtier (1) et la première partie de boîtier (20) dans une position de rotation dans laquelle une ouverture du boîtier est fermée.

6. Boîtier selon l'une quelconque des revendications précédentes, **caractérisé en ce que** le renfoncement (39, 42) et le rehaussement (43) s'étendent dans la direction de l'axe de rotation uniquement sur une partie de l'étendue axiale de l'axe (25), de sorte qu'une résistance mécanique soit formée par la coopération du renfoncement (39, 42) et du rehaussement (43), laquelle rend plus difficile ou empêche que le rehaussement (43) quitte le renfoncement (39, 42) par un déplacement du rehaussement (43) dans la direction de l'axe de rotation.

7. Boîtier selon l'une quelconque des revendications précédentes, **caractérisé en ce qu'**une pluralité des première et/ou deuxième parties de charnière est prévue, ladite pluralité des première et/ou deuxième parties de charnière étant disposée de telle sorte que l'on forme ou que l'on puisse former à partir d'elles une charnière commune (14, 25) avec un axe de rotation défini.
